(19) Europäisches Patentamt

European Patent Office

Office européen des brevets

(11) Veröffentlichungsnummer: **0 207 070 B1**

(12) **EUROPÄISCHE PATENTSCHRIFT**

(45) Veröffentlichungstag der Patentschrift: **15.04.92**

(21) Anmeldenummer: **86890182.8**

(22) Anmeldetag: **19.06.86**

(51) Int. Cl.⁵: **D21C 11/02**, D21C 11/06, B01D 39/20, B01D 46/04, B01D 46/06

(54) Verfahren zur Regenerierung von Aufschlusslösung aus der gebrauchten Kochlauge eines Magnesiumbisulfit-Aufschlussverfahrens sowie Filterapparat zur Durchführung des Verfahrens.

(30) Priorität: **27.06.85 AT 1915/85**

(43) Veröffentlichungstag der Anmeldung:
**30.12.86 Patentblatt 86/52**

(45) Bekanntmachung des Hinweises auf die Patenterteilung:
**15.04.92 Patentblatt 92/16**

(84) Benannte Vertragsstaaten:
**DE SE**

(56) Entgegenhaltungen:
DE-A- 2 200 155     DE-A- 2 810 937
DE-A- 2 815 531     DE-A- 2 823 749
DE-A- 3 404 052     DE-A- 3 409 240
GB-A- 1 539 206     US-A- 3 437 457
US-A- 4 152 127

RESEARCH DISCLOSURE, Nr. 197, September 1980, Zusammenfassung Nr. 19714, September 1980, Seiten 381-382, Havant, Hampshire, GB; IMPERIAL CHEMICAL INDUSTRIES: "High temperature gas filtration"

(73) Patentinhaber: **Lenzing Aktiengesellschaft**

**A-4860 Lenzing(AT)**

Patentinhaber: **WAAGNER-BIRO AKTIENGE-SELLSCHAFT**
**Stadlauer-Strasse 54 Postfach 11**
**A-1221 Wien(AT)**

(72) Erfinder: **Zikeli, Stefan**
**Schacha 14**
**A-4844 Regau(AT)**
Erfinder: **Wolschner, Bernd, Dipl.-Ing. Dr.**

**A-4852 Weyregg 252(AT)**
Erfinder: **Glaser, Wolfgang J., Dipl.-Ing.**
**Strassganger Strasse 146**
**A-8052 Graz(AT)**
Erfinder: **Loquenz, Heinz, Dipl.-Ing.**
**Hans Riehlgasse 10/3**
**A-8043 Graz(AT)**

Erfinder: **Schweiger, Helmut**
**Ursprungweg 41**
**A-8045 Graz(AT)**

(74) Vertreter: **Wolfram, Gustav, Dipl.-Ing.**
**Schwindgasse 7 P.O. Box 205**
**A-1041 Wien(AT)**

**Beschreibung**

Die Erfindung betrifft ein Verfahren zur Regenerierung von Aufschlußlösung aus der gebrauchten Kochlauge eines Magnesiumbisulfit-Aufschlußverfahrens, wobei die Kochlauge verbrannt und in den resultierenden Verbrennungsgasen enthaltenes Magnesiumoxid und Schwefeldioxid zur Herstellung von Magnesiummonosulfit (MgSO$_3$) und Magnesiumbisulfit (Mg(HSO$_3$)$_2$) herangezogen wird, ein Teil des MgSO$_3$ thermisch gespalten und die Spaltprodukte gewonnen werden, sowie einen Filterapparat zur Durchführung des Verfahrens.

Ein Verfahren dieser Art kann der AT-B - 347 236 entnommen werden. Bei der Zellstoffherstellung entweder mit einer Aufschlußlösung, welche kein freies, gelöstes SO$_2$ enthält (Magnefite-Verfahren) oder mit einer freies, gelöstes SO$_2$ enthaltenden Aufschlußlösung (saures Magnesiumbisulfitverfahren) wird danach getrachtet, die Grundchemikalien Magnesiumoxid und Schwefeldioxid möglichst ohne Verluste im Kreislauf zu führen.

Die nach der Kochung von cellulosehältigem Material mit einer Magnesiumbisulfit-Aufschlußlösung unter erhöhtem Druck anfallende Kochlauge, welche nach Vereinigung mit dem Waschwasser aus der Zellstoffwäsche als Dünnlauge bezeichnet wird, weist beim sauren Mg-bisulfitverfahren einen pH-Wert von etwa 2 bis 3 und einen Trockensubstanzgehalt von etwa 18 Massen% auf. Die Dünnlauge wird auf einen Trockensubstanzgehalt von etwa 55 Massen% eingedampft und in einem Laugenkessel verbrannt, wobei die Verbrennungstemperatur bei etwa 1250°C liegt. Die Verbrennungswärme kann zur Abdeckung des betrieblichen Energiebedarfes, beispielsweise zur Erzeugung von Strom oder von Prozeßdampf mit etwa 4 bar Druck, genützt werden.

Die Verbrennungsgase enthalten SO$_2$ in der Größenordnung von etwa 1 % und MgO, welch letzteres abgetrennt und in Wasser unter Bildung von MgO-Hydrat aufgeschlämmt wird. Die im Überstand enthaltenen wasserlöslichen Ballaststoffe, wie Chloride und Sulfite von Alkalimetallen, werden mittels eines Sedimentationsbeckens im Überlauf ausgeschleust. Das abgesetzte und notwendigenfalls aus zusätzlichem MgO bereitete MgO-Hydrat wird als wässerige Aufschlämmung einer Absorptionsanlage zugeführt, welche im wesentlichen zwei Absorptionsstufen mit zwei oder mehreren Absorptionstürmen umfaßt.

In der ersten Stufe, der Monosulfitstufe, wird bei einem pH-Wert > 7 mit SO$_2$ das nur schwer wasserlösliche Magnesiummonosulfit gebildet, welches als Kristallbrei anfällt. Das SO$_2$ stammt aus sogenanntem Schwachgas mit einem Gehalt von maximal 1,5 % SO$_2$, wobei das Schwachgas von MgO befreites Verbrennungsgas sowie SO$_2$-Mengen, welche gegebenenfalls bei der Kochung, der Zellstoffwäsche oder der Dünnlaugen-Eindampfung frei werden, in sich vereinigt. Der MgSO$_3$-Kristallbrei wird sodann in einer Zweiten Absorptionsstufe mit weiterem SO$_2$ aus dem Schwachgas bei einem pH-Wert < 5 zu gut wasserlöslichem Magnesiumbisulfit umgesetzt. Die in der erhaltenen Mg(HSO$_3$)$_2$-Lösung noch enthaltenen wasserunlöslichen Ballaststoffe werden abgetrennt; die verbleibende Lösung wird als Rohsäure bezeichnet und einem Drucksäuresystem zugeführt.

Wie bereits in der AT-B - 347 236 dargelegt ist, kann das SO$_2$ nicht verlustlos kreislaufgeführt werden. Beim sauren Magnesiumbisulfitverfahren wird der Rohsäure im Drucksäuresystem bzw. im Kocher bei einem Druck von 1 bis 5 bar SO$_2$ bis zur Sättigung der Lösung zugeführt. Dieses nicht chemisch an Magnesium gebundene SO$_2$ wird als freies SO$_2$ bezeichnet.

Ein Vorteil des sauren Verfahrens gegenüber dem Magnefite-Verfahren ist in den für den Zellstoffaufschluß notwendigen erheblich niedrigeren Kochtemperaturen und Drücken begründet. Allerdings muß der Anteil des freien SO$_2$, der nicht im Drucksäuresystem verbleibt (Rückgasungen aus dem Kocher), sondern in die Dünnlauge eingebunden ist, aus dem Kreislauf entfernt werden und darf nicht zur Gänze der Absorptionsanlage zugeführt werden, um ein ständiges Ansteigen der Rohsäuremenge zu verhindern.

Die Gewinnung eines an SO$_2$ höher konzentrierten, sogenannten "Starkgases", welches dem Drucksäuresystem zugeführt werden könnte, aus dem Schwachgas ist wirtschaftlich nicht vertretbar.

Um SO$_2$ daher in wieder verwertbarer Form aus dem Kreislauf zu entfernen, wird nach der AT-B - 347 236 ein Teil des MgSO$_3$ aus der Monosulfitstufe getrocknet und in einer Sulfitspaltanlage - beispielsweise in einem indirekt beheizten Drehrohrofen - bei Temperaturen von etwa 700 bis 800°C gespalten.

Das bei der Spaltung entstehende MgO kann einerseits direkt - beispielsweise über eine Zellradschleuse - der Spaltanlage entnommen werden und muß andererseits als Feinstaub aus dem heißen Spaltgas (Prozeßgas) abgetrennt werden. Das MgO kann zum einen Teil für die Teilneutralisation der Dünnlauge vor dem Eindampfen verwendet und zum anderen Teil dem Hydratisierbehälter, in welchem das aus den Verbrennungsgasen abgeschiedene MgO aufgeschlämmt wird, zugeführt werden.

Das Prozeßgas wird sodann über einen Gaskühler geführt und dort durch indirekte Kühlung weitestgehend getrocknet. Dieses SO$_2$-Starkgas mit einer Konzentration von ca. 70 bis 80 % an SO$_2$ kann entweder direkt dem Drucksäuresystem zur Rohsäureaufstärkung zugeführt werden oder es wird in einer Kondensationsanlage zu flüssigem

$SO_2$ verarbeitet und danach direkt dem Kocher als Aufstärkung zugeführt. Darüber hinaus ist eine Verarbeitung dieses Starkgases zu elementarem Schwefel bzw. zu Schwefelsäure möglich.

Eine möglichst vollständige Abtrennung des MgO-Feinstaubes aus dem Prozeßgas ist eine unbedingte Voraussetzung für eine erfolgreiche Verwirklichung des Verfahrens. Wird nämlich das Prozeßgas (Spaltgas) abgekühlt, ohne vorher das MgO praktisch restlos zu entfernen, kondensiert der im Prozeßgas enthaltene, relativ hohe Anteil an aus dem Kristallwasser des gespaltenen Magnesiummonosulfits stammende Wasserdampf und infolge Rückbildung von $MgSO_3$ treten Verkrustungen in den Anlagenteilen auf. Solche Verkrustungen können das gesamte Verfahren undurchführbar machen und müssen daher unbedingt vermieden werden. Eine Abscheidung des MgO-Staubes mittels eines Zyklons erwies sich als bei weitem nicht ausreichend effizient.

Die Erfindung stellt sich die Aufgabe, die aufgezeigten Schwierigkeiten zu überwinden, d.h. eine praktisch vollständige Abtrennung des MgO-Staubes bei geringem Druckverlust in dem erforderlich hohen Temperaturbereich zu bewirken, ohne das Prozeßgas wesentlich abzukühlen. Dabei war zu berücksichtigen, daß die üblichen Methoden zur Staubabscheidung aus Rauchgasen nicht in Frage kamen. Derartige bekannte Methoden sind u.a. im Research Disclosure, Nr. 197, September 1980, Zusammenfassung Nr. 19714 beschrieben, wo ein Apparat mit anorganischen Fasern, insbesondere Aluminiumoxidfasern, in Streifenform als Filtermaterial beschrieben ist. Weiters ist in der DE-A - 2 810 937 ein hochtemperaturbeständiges Filtermaterial aus einem keramischen Nadelfilz zum Abscheiden von feinkörnigen Feststoffen empfohlen. In der US-A - 3,437,457 ist ein Metallgewebe, einsetzbar als Diffusionsmembran, Filtermaterial, Schalldämpfer etc. beschrieben.

Keiner dieser zum Stand der Technik gehörenden Vorschläge befaßt sich jedoch mit dem der Erfindung zugrundeliegenden Problem, wo es darum geht, aus einem Dreistoffgemisch, bestehend aus feinstem MgO-Staub, wasserdampf und $SO_2$, welches aufgrund seines Chemismus äußerst schwierig zu handhaben ist, da es beim Abkühlen zu Magnesiumbisulfit rückreagiert, den MgO-Staub abzutrennen. Auch andere bekannte Verfahren, wie Filtration mittels Elektrofiltern, textilen Schlauchfiltern oder Filtern aus synthetischen Geweben, kommen nicht in Frage, da sie nur bei relativ niedrigen Temperaturen einsetzbar sind bzw. der Druckabfall - bei Keramikfiltern bis zu 500 mbar - zu hoch ist.

Die gestellte Aufgabe wird bei einem Verfahren der eingangs definierten Art erfindungsgemäß dadurch gelöst, daß das bei der Spaltung des Magnesiummonosulfites entstandene, $SO_2$, MgO und $H_2O$ enthaltende heiße Prozeßgas zur Abtrennung des MgO-Staubes einer Filtration unter Verwendung eines Wirrfaservlieses unterworfen wird, welches Wirrfaservlies eine sehr hohe Porosität bis zu 80 % aufweist und aus einem hochtemperaturbeständigen, gesinterten metallischen Werkstoff mit Metallfasern mit stärken von 4 μm bis 100 μm und einer mittleren Länge von 25 mm zusammengesetzt ist, und daß das Wirrfaservlies erforderlichenfalls gereinigt wird.

Zweckmäßig wird die Filtration bei einer Temperatur von 300 bis 800°C durchgeführt, um die Kondensation des im Prozeßgas enthaltenen Wassers zu vermeiden.

Das Wirrfaservlies wird vorteilhaft durch Rückspülung mit einem inerten Gas oder mit dem gereinigten Prozeßgas bei einer Temperatur von 300 bis 800°C gereinigt.

Die Rückspülung wird jeweils nach Erreichen eines vorbestimmten - vom Beladungsgrad des Wirrfaservlieses mit Staub abhängigen - erhöhten Druckabfalles eingeleitet.

Nach einer weiteren vorteilhaften Ausführungsform wird das Wirrfaservlies durch Behandeln mit einer sauren Flüssigkeit eines pH-Wertes von unter 6, beispielsweise mit Magnesiumbisulfitlösung, gereinigt.

Es ist auch möglich, das Wirrfaservlies einfach durch mechanische Erschütterungen bzw. Vibrationen vom MgO-Staub zu befreien.

Der erfindungsgemäße Filterapparat mit einem hitzebeständigen Gehäuse, einem in das Gehäuse in die Strömung des zu filtrierenden Prozeßgases einsetzbaren Filterelement und innerhalb des Apparates vorgesehenen Vorrichtungen zur Reinigung des Filterelements ist dadurch gekennzeichnet, daß das Filterelement mit einem Wirrfaservlies aus einem hochtemperaturbeständigen, gesinterten metallischen Werkstoff, insbesondere aus rostfreien Chrom-Nickel- oder Chrom-Nickel-Molybdän-Stählen, mit Metallfasern mit stärken von 4 μm bis 100 μm und einer mittleren Länge von 25 mm, ausgestattet ist, welches Wirrfaservlies eine sehr hohe Porosität bis zu 80 % aufweist.

Ein Wirrfaservlies aus metallischem Werkstoff ist - je nach gewünschtem freiem Querschnitt der Öffnungen - aus Metallfasern mit Stärken von 4 um bis 100 μm und einer mittleren Länge von 25 mm zusammengesetzt. Als Folge der Sinterung werden die Öffnungen hinsichtlich ihrer Größe und Lage unveränderbar. Die Gesamtstruktur des gesinterten Wirrfaservlieses bleibt jedoch flexibel.

Die Vliese weisen infolge ihrer sehr hohen Porosität von bis zu 80 %, d.h. ihrer im Vergleich zum Faseranteil sehr großen Summe der freien Öffnungsquerschnitte, außerordentlich hohe Durchströmbarkeit auf, wodurch die Einstellung einer spezifischen Gasgeschwindigkeit im Bereich von 1 bis 20 cm/s bei einer Beladung mit Staub von 10 bis 400 g/m³ möglich ist.

Die Differenz der in Strömungsrichtung vor und nach dem Filterelement gemessenen Drucke ist demnach vergleichsweise sehr gering.

Bei einem Vlies aus Edelstahlfasern mittlerer Stärke beträgt der Mittelwert des Druckverlustes während einer gesamten Filtrationsperiode bis zur Reinigung des Filterelementes beispielsweise nur etwa 10 mbar.

Zur Erhöhung der Formstabilität ist ein Wirrfaservlies aus metallischem Werkstoff zweckmäßig auf ein metallisches Stützgewebe aufgebracht und aufgesintert. Ein solcher Aufbau verleiht dem Filterelement höchste Beständigkeit gegen Druckstöße und ermöglicht eine gute Übertragung mechanischer Schwingungen bei der Reinigung des Vlieses.

Nach einer zweckmäßigen Ausbildung ist das Filterelement als mit dem Wirrfaservlies bespannter Rahmen ausgebildet, in dessen Innenraum Spüllanzen vorgesehen sind.

Gemäß einer besonders bevorzugten Ausführungsform ist das Wirrfaservlies über einen sich in das Innere des Gehäuses erstreckenden Ringflansch und einen den Innenraum des Gehäuses durchsetzenden zentralen Träger zur Bildung eines Filterkorbes zwischen dem zentralen Träger und der Wand des Gehäuses gelegt, wobei mittels des zentralen Trägers die Wand des Filterkorbes in Bewegung versetzbar ist.

Der zentrale Träger weist vorteilhaft Auslässe zum Einführen eines Rückspülmediums auf und ist weiters vorzugsweise mit einer Oszillationsvorrichtung verbunden. Die mittels der Oszillationsvorrichtung auf das Filterelement übertragbaren Schwingungen bewirken in vielen Fällen allein schon eine ausreichende Reinigung der Wirrfaservliese. Selbstverständlich können die Schwingungen auch während eines Rückspülvorganges unterstützend ausgeübt werden.

Die Erfindung wird im folgenden anhand zweier Ausführungsbeispiele in der Zeichnung noch näher erläutert. Fig. 1 zeigt eine Seitenansicht eines erfindungsgemäßen Filterapparates mit rechteckigem Rahmen, Fig. 2 ist eine Ansicht dieses Filterapparates aus Richtung II und in Fig. 3 ist ein erfindungsgemäßer Filterapparat mit einem Filterelement in Form eines zylindrischen Korbes dargestellt.

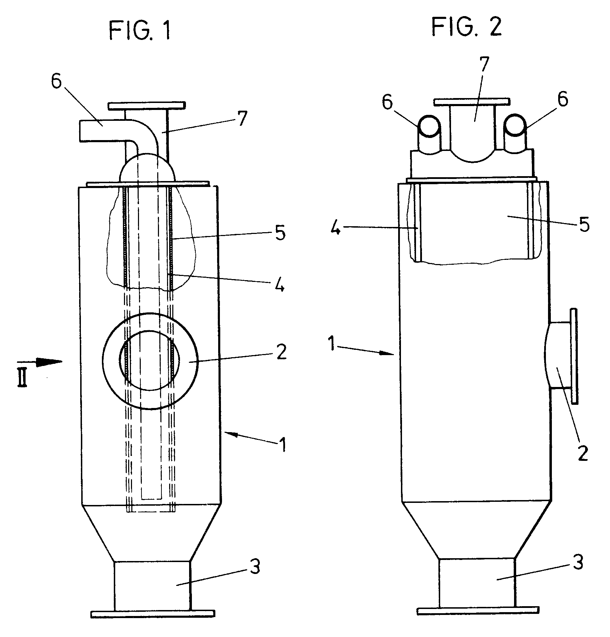

Mit 1 ist jeweils allgemein ein zylindrisches Gehäuse bezeichnet, welches seitlich angesetzt einen Einlaßstutzen 2 für Prozeßgas und einen zentralen Staubaustrag 3 an seinem unteren Ende aufweist. Das Filterelement besteht gemäß Fig. 1 und 2 aus einem rechteckigen Rahmen 4, welcher als Träger für ein Wirrfaservlies 5 dient. Der Rahmen 4 bildet mit dem Wirrfaservlies 5 eine sogenannte Filtertasche, in deren Innenraum zwei Spüllanzen 6 geführt sind.

Das entstaubte Prozeßgas verläßt den Filterapparat bzw. den Innenraum der Filtertasche durch den Abzug 7.

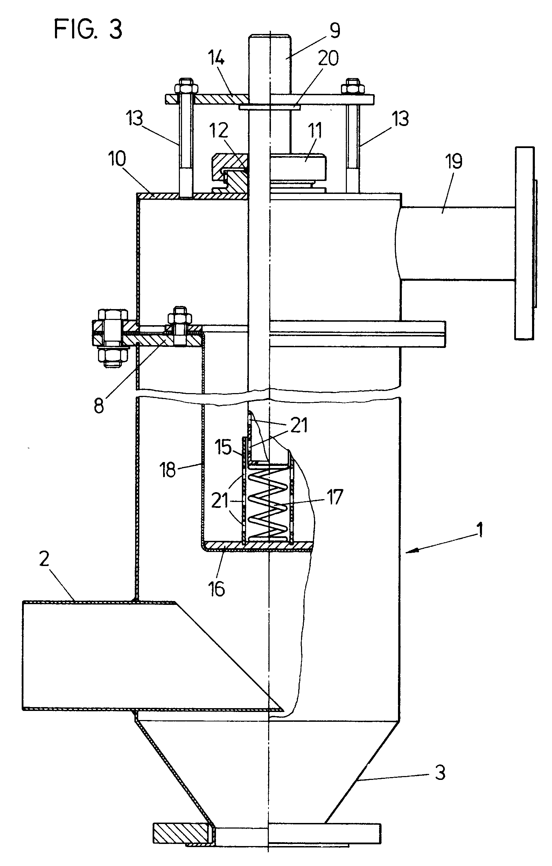

Bei dem Ausführungsbeispiel nach Fig. 3 erstreckt sich ein Ringflansch 8 in das Innere des zylindrischen Gehäuses 1. Ein Rohr 9 ist zentral durch die obere Abdeckung 10 des Gehäuses 1 geführt. Um eine Vertikalbewegung des Rohres 9 relativ zum Gehäuse 1 zu ermöglichen, sind an der Abdeckung 10 ein Schraubflansch 11 mit einer Ringdichtung 12 und weiters eine von in der Abdeckung 10 verankerten Stützen 13 getragene Führungsplatte 14 vorgesehen. Über das untere Ende des Rohres 9 ist eine Hülse 15 geschoben.

Die Hülse 15 ist unten durch eine koaxial angebrachte Kreisscheibe 16 mit größerem Durchmesser als die Hülse verschlossen. Zwischen dem unteren Ende des Rohres 9 und der Kreisscheibe 16 ist im Inneren der Hülse 15 eine Schraubenfeder 17 vorgesehen. Das Rohr 9, die Hülse 15, die Kreisscheibe 16 sowie die Schraubenfeder 17 stellen gemeinsam einen zentralen Träger für ein Wirrfaservlies 18 dar, welch letzteres über die Kreisscheibe 16 gelegt und im Ringflansch 8 eingespannt ist. Auf diese Weise wird ein zylindrischer Filterkorb gebildet, welcher sich zwischen dem zentralen Träger und der Wand des Gehäuses erstreckt.

Zwischen dem Ringflansch 8 und knapp unterhalb der oberen Abdeckung 10 ist ein Abzugsstutzen 19 für das entstaubte Prozeßgas seitlich am Gehäuse 1 vorgesehen. Unter der Wirkung der Schraubenfeder 17 wird das Wirrfaservlies 18 mit einer bestimmten Vorspannung beaufschlagt, welche von der Position des Anschlagringes 20 am Rohr 9 abhängt. Der zentrale Träger bzw. das Rohr 9 ist weiters mit einer nicht dargestellten Oszillationsvorrichtung verbunden und das Rohr 9 weist im Bereich innerhalb des Filterkorbes genauso wie die Hülse 15 Auslässe 21 zum Einführen eines Rückspülmediums auf.

Zur Reinigung des Wirrfaservlieses 18 wird der Zustrom des heißen Prozeßgases durch Einlaßstutzen 2 kurzzeitig unterbrochen und mittels der Oszillationsvorrichtung wird der zentrale Träger und damit das Vlies 18 in Schwingungen versetzt. Der am Filterkorb bzw. am Vlies 18 haftende Staub fällt durch den zentralen Staubaustrag 3 in ein Sammelgefäß, aus welchem er in den Hydratisierbehälter abgezogen werden kann.

Unabhängig von diesem mechanischen Reinigungsvorgang kann durch das Rohr 9 des zentralen Trägers ein Rückspülmedium eingeführt werden, welches durch die Auslässe 21 in das Innere des Filterkorbes gelangt und beim Durchströmen des Wirrfaservlieses 18 den daran haftenden Staubbelag abträgt. Die Gasfiltration kann unmittelbar nach der Reinigung fortgesetzt werden.

Selbstverständlich können erfindungsgemäß auch mehrere taschen- oder korbförmige Filterelemente in ein einziges Gehäuse nach Art eines Mehrkammerfilters eingesetzt sein.

Weiters können zur Durchführung des erfindungsgemäßen Verfahrens auch mehrere erfindungsgemäße Filterapparate hintereinander oder parallel geschaltet sein.

**Patentansprüche**

1. Verfahren zur Regenerierung von Aufschlußlösung aus der gebrauchten Kochlauge eines Magnesiumbisulfit-Aufschlußverfahrens, wobei die Kochlauge verbrannt und in den resultierenden Verbrennungsgasen enthaltenes Magnesiumoxid und Schwefeldioxid zur Herstellung von Magnesiummonosulfit ($MgSO_3$) und Magnesiumbisulfit ($Mg(HSO_3)_2$) herangezogen wird, ein Teil des $MgSO_3$ thermisch gespalten und die Spaltprodukte gewonnen werden, dadurch gekennzeichnet, daß das bei der Spaltung des Magnesiummonosulfites entstandene, $SO_2$, MgO und $H_2O$ enthaltende heiße Prozeßgas zur Abtrennung des MgO-Staubes einer Filtration unter Verwendung eines Wirrfaservlieses (5; 18) unterworfen wird, welches Wirrfaservlies eine sehr hohe Porosität bis zu 80 % aufweist und aus einem hochtemperaturbeständigen, gesinterten metallischen Werkstoff mit Metallfasern mit Stärken von 4 $\mu$m bis 100 $\mu$m und einer mittleren Länge von 25 mm zusammengesetzt ist, und daß das Wirrfaservlies erforderlichenfalls gereinigt wird.

2. Verfahren nach Anspruch 1, dadurch gekennzeichnet, daß die Filtration bei einer Temperatur von 300 bis 800°C durchgeführt wird.

3. Verfahren nach einem der Ansprüche 1 oder 2, dadurch gekennzeichnet, daß das Wirrfaservlies (5; 18) durch Rückspülung mit einem inerten Gas oder mit dem gereinigten Prozeßgas bei einer Temperatur von 300 bis 800°C gereinigt wird.

4. Verfahren nach einem der Ansprüche 1 oder 2, dadurch gekennzeichnet, daß das Wirrfaservlies (5; 18) durch Behandeln mit einer sauren Flüssigkeit eines pH-Wertes von unter 6, beispielsweise mit Magnesiumbisulfitlösung, gereinigt wird.

5. Filterapparat zur Durchführung des Verfahrens nach einem der Ansprüche 1 bis 4, mit einem hitzebeständigen Gehäuse (1), einem in das Gehäuse (1) in die Strömung des zu filtrierenden Prozeßgases einsetzbaren Filterelement und innerhalb des Apparates vorgesehenen Vorrichtungen zur Reinigung des Filterelements, dadurch gekennzeichnet, daß das Filterelement mit einem Wirrfaservlies (5; 18) aus einem hochtemperaturbeständigen, gesinterten metallischen Werkstoff, insbesondere aus rostfreien Chrom-Nickel- oder Chrom-Nickel-Molybdän-Stählen, mit Metallfasern mit Stärken von 4 $\mu$m bis 100 $\mu$m und einer mittleren Länge von 25 mm ausgestattet ist, welches Wirrfaservlies eine sehr hohe Porosität bis zu 80 % aufweist.

6. Filterapparat nach Anspruch 5, dadurch gekennzeichnet, daß das Wirrfaservlies (5; 18) auf ein metallisches Stützgewebe aufgebracht und aufgesintert ist.

7. Filterapparat nach einem der Ansprüche 5 oder 6, dadurch gekennzeichnet, daß das Filterelement als mit dem Wirrfaservlies (5) bespannter Rahmen (4) ausgebildet ist, in dessen Innenraum Spüllanzen (6) vorgesehen sind (Fig. 1, 2).

8. Filterapparat nach einem der Ansprüche 5 oder 6, dadurch gekennzeichnet, daß das Wirrfaservlies (18) über einen sich in das Innere des Gehäuses erstreckenden Ringflansch (8) und einen den Innenraum des Gehäuses durchsetzenden zentralen Träger (9, 15, 16, 17) zur Bildung eines Filterkorbes zwischen dem zentralen Träger und der Wand des Gehäuses (1) gelegt ist, wobei mittels des zentralen Trägers die Wand des Filterkorbes in Bewegung versetzbar ist (Fig. 3).

9. Filterapparat nach Anspruch 8, dadurch gekennzeichnet, daß der zentrale Träger (9, 15) Auslässe (21) zum Einführen eines Rückspülmediums aufweist.

10. Filterapparat nach einem der Ansprüche 8 oder 9, dadurch gekennzeichnet, daß der zentrale Träger (9) mit einer Oszillationsvorrichtung verbunden ist.

**Claims**

1. A method for regenerating pulping solution from the spent cooking liquor of a magnesium bisulfite pulping process, wherein the cooking liquor is burnt and magnesium oxide and sulphur dioxide contained in the resulting combustion gases are used for the production of magnesium monosulfite ($MgSO_3$) and magne-

sium bisulfite (Mg(HSO$_3$)$_2$), a portion of the MgSO$_3$ is thermally cleaved and the cleavage products are recovered, characterized in that the hot process gas formed during the cleavage of magnesium monosulfite and containing SO$_2$, MgO and H$_2$O, is subjected to a filtration procedure to separate the MgO dust by using an entangled fibre web (5; 18), which entangled fibre web exhibits a very high porosity of up to 80 % and is composed of a high-temperature resistant sintered metallic material including metal fibres having thicknesses of from 4 $\mu$m to 100 $\mu$m and an average length of 25 mm, and that the entangled fibre web is cleaned, if required.

2. A method according to claim 1, characterized in that the filtration procedure is carried out at a temperature of from 300 to 800°C.

3. A method according to any one of claims 1 or 2, characterized in that the entangled fibre web (5; 18) is cleaned by backflushing with an inert gas or purified process gas at a temperature of from 300 to 800°C.

4. A method according to any one of claims 1 or 2, characterized in that the entangled fibre web (5; 18) is cleaned by being treated with an acidic liquid having a pH of below 6, for instance, with magnesium bisulfite solution.

5. A filtering apparatus for carrying out the process according to any one of claims 1 to 4, comprising a heat-resistant casing (1), a filter element insertable into said casing (1) in the flow of the process gas to be filtered, and means for cleaning said filter element provided within said apparatus, characterized in that the filter element is equipped with an entangled fibre web (5; 18) of a high-temperature resistant sintered metallic material, in particular, of stainless chromium-nickel or chromium-nickel-molybdenum steels, including metal fibres having thicknesses of from 4 $\mu$m to 100 $\mu$m and an average length of 25 mm, which entangled fibre web exhibits a very high porosity of up to 80 %.

6. A filtering apparatus according to claim 5, characterized in that the entangled fibre web (5; 18) is applied and sintered on a metallic supporting web.

7. A filtering apparatus according to any one of claims 5 or 6, characterized in that the filter element is designed as a frame (4) covered by said entangled fibre web (5) and in whose interior flushing lances (6) are provided (Figs. 1, 2).

8. A filtering apparatus according to any one of claims 5 or 6, characterized in that the entangled fibre web (18) is laid over an annular flange (8) extending into the interior of the casing and over a central carrier (9, 15, 16, 17) passing through the interior of the casing, so as to form a filter basket between said central carrier and the wall of the casing (1), the wall of the filter basket being displaceable by means of the central carrier (Fig. 3).

9. A filtering apparatus according to claim 8, characterized in that the central carrier (9, 15) comprises outlets (21) for introducing backflush medium.

10. A filtering apparatus according to any one of claims 8 or 9, characterized in that the central carrier (9) is connected to an oscillation means.

## Revendications

1. Procédé de régénération d'une solution d'attaque à partir de la lessive usée d'un procédé d'attaque au bisulfite de magnésium, la lessive étant soumise à une combustion et l'oxyde de magnésium et le dioxyde de soufre contenus dans les gaz de combustion obtenus étant utilisés pour la fabrication de monosulfite de magnésium (MgSO$_3$) et de bisulfite de magnésium (Mg(HSO$_3$)$_2$), une partie de MgSO$_3$ étant scindée termiquement et les produits de scission étant recueillis, caractérisé en ce que le gaz de processus chaud contenant SO$_2$, MgO et H$_2$O, formé lors de la scission du monosulfite de magnésium est soumis, en vue de la séparation de la poussière de MgO, à une filtration utilisant un matelas de fibres embrouillées (5 ; 18), lequel matelas de fibres embrouillées présente une porosité très élevée atteignant jusqu'à 80 % et est composé d'un matériau métallique fritté, à haute résistance thermique, présentant des fibres métalliques d'épaisseurs comprises entre 4 $\mu$m et 100 $\mu$m et de longueur moyenne égale à 25 mm et en ce que le matelas de fibres embrouillées est nettoyé en cas de nécessité.

2. Procédé selon la revendication 1, caractérisé en ce que la filtration est opérée à une température comprise entre 300 et 800°C.

3. Procédé selon l'une des revendications 1 ou 2, caractérisé en ce que le matelas de fibres embrouillées (5 ; 18) est nettoyé par rinçage à contre-courant à l'aide d'un gaz inerte ou du gaz de processus purifié, à une température comprise entre 300 et 800°C.

4. Procédé selon l'une des revendications 1 ou 2, caractérisé en ce que le matelas de fibres embrouillées (5 ; 18) est nettoyé par traitement à l'aide d'un liquide acide de pH inférieur à 6, par exemple à l'aide d'une solution de bisulfite de magnésium.

5. Appareil de filtration destiné à la mise en oeuvre du procédé selon l'une des revendications 1 à 4, muni d'un carter (1) réfractaire, d'un élément filtrant incorporable dans le carter (1) dans le courant du gaz de processus à filtrer et de dispositifs de nettoyage de l'élément filtrant prévus à l'intérieur de l'appareil, caractérisé en ce que l'élément filtrant est muni d'un matelas de fibres embrouillées (5 ; 18) en un matériau métallique fritté à haute résistance thermique, notamment en aciers inoxydables au chrome-nickel ou au chrome-nickel-molybdène, présentant des fibres métalliques d'épaisseurs comprises entre 4 $\mu$m et 100 $\mu$m et de longueur moyenne égale à 25 mm, lequel matelas à fibres embrouillées présente une porosité très élevée atteignant jusqu'à 80 %.

6. Appareil de filtration selon la revendication 5, caractérisé en ce que le matelas de fibres embrouillées (5 ; 18) est déposé sur un tissu d'appui métallique et fritté.

7. Appareil de filtration selon l'une des revendications 5 ou 6, caractérisé en ce que l'élément filtrant a la forme d'un cadre (4) dans lequel est tendu le matelas de fibres embrouillées (5) et à l'intérieur duquel sont prévues des lances de rinçage (6) (figure 1, 2).

8. Appareil de filtration selon l'une des revendications 5 ou 6, caractérisé en ce que le matelas de fibres embrouilées (18) est placé sur une bride annulaire (8) s'étendant à l'intérieur du carter et un support central (9, 15, 16, 17) traversant l'intérieur du carter en vue de la formation d'un panier filtrant entre le support central et la paroi du carter (1), la paroi du panier filtrant étant déplaçable au moyen du support central (figure 3).

9. Appareil de filtration selon la revendication 8, caractérisé en ce que le support central (9, 15) présente des orifices (21) permettant l'introduction d'un agent de rinçage à contre-courant.

10. Appareil de filtration selon l'une des revendications 8 ou 9, caractérisé en ce que le support central (9) est relié à un dispositif d'oscillation.

FIG. 1

FIG. 2

FIG. 3